# FASCICULE DE BREVET EUROPEEN

(11) **EP 4 099 229 B1**
(45) Date de publication et mention de la délivrance du brevet: **21.08.2024**
(21) Numéro de dépôt: 22176790.8
(22) Date de dépôt: 01.06.2022
(51) Int. Cl.: G06N 3/04, G06N 3/063, G06N 3/08

(54) **ACCÉLÉRATEUR SYSTOLIQUE DE RÉSEAU DE NEURONES ET SYSTÈME ÉLECTRONIQUE ET PROCÉDÉ DE TEST ASSOCIÉS**
SYSTOLISCHER BESCHLEUNIGER FÜR NEURONALE NETZE UND ENTSPRECHENDES ELEKTRONISCHES SYSTEM UND TESTVERFAHREN
SYSTOLIC ACCELERATOR FOR NEURAL NETWORK AND ASSOCIATED ELECTRONIC SYSTEM AND TEST METHOD

(30) Priorité: 02.06.2021 FR 2105808
(43) Date de publication de la demande: 07.12.2022
(73) Titulaire: Commissariat à l'énergie atomique et aux énergies alternatives, 75015 Paris (FR)
(72) Inventeur: BUREL, Stéphane, 38054 Grenoble (FR); EVANS, Adrian, 38054 Grenoble (FR); ANGHEL, Lorena, 38340 Voreppe (FR)
(74) Mandataire: Lavoix

(56) Documents cités:
- CN-A- 109 857 024
- US-A- 4 791 590
- ZHANG JEFF JUN ET AL: "Fault-Tolerant Systolic Array Based Accelerators for Deep Neural Network Execution", IEEE DESIGN&TEST, IEEE, PISCATAWAY, NJ, USA, vol. 36, no. 5, 1 October 2019 (2019-10-01), pages 44 - 53, XP011748256, ISSN: 2168-2356, [retrieved on 20191002], DOI: 10.1109/MDAT.2019.2915656

## Description

La présente invention concerne un accélérateur systolique de réseau de neurones. La présente invention se rapporte également à un système électronique comprenant l'accélérateur systolique et à un procédé de test de processeurs élémentaires de l'accélérateur systolique.

Le développement des systèmes électroniques destinés à la voiture autonome se heurte à plusieurs impératifs techniques contradictoires.

D'un côté, il convient que les systèmes soient très performants puisqu'ils sont confrontés à des situations complexes à détecter.

En outre, la norme ISO 26262 qui est une norme ISO émergente pour les systèmes de sécurité dans les véhicules routiers à moteur impose des contraintes strictes de sécurité de fonctionnement pour de tels systèmes.

En particulier, la norme ISO 26262 impose qu'il soit possible d'effectuer un test du bon fonctionnement de chaque partie du système électronique même lorsque celui-ci est en fonctionnement. Pour des raisons évidentes, il convient aussi que la probabilité de fausse détection de défaillance d'une partie du système électronique qui soit basse ou encore qu'une défaillance d'une partie soit détectée rapidement.

D'un autre côté, les contraintes de l'embarqué impliquent que le système électronique soit le plus économe possible en ressources, notamment en ressources matérielles ou énergétiques.

Il est donc souhaitable que les systèmes électroniques soient de plus en plus performants tout en diminuant leur encombrement, leur poids ou leur consommation.

Pour obtenir de telles performances, il est connu d'utiliser des accélérateurs systoliques de réseau de neurones qui permettent de bénéficier de l'adaptabilité d'un réseau de neurones à une tâche avec une architecture de calcul relativement compact et efficace.

Le document CN 109 857 024 décrit un exemple d'accélérateur systolique.

Toutefois, pour assurer la sécurité, il convient de mettre en oeuvre une redondance matérielle ou temporelle pour détecteur la présence d'une défaillance. Ceci a un impact significatif sur les ressources matérielles ou énergétiques, ce qui est parfois incompatible avec une application embarquée.

Il existe donc un besoin pour un accélérateur systolique de réseau de neurones permettant de respecter des critères de fiabilité impliquant moins de ressources matérielles ou énergétiques.

A cet effet, la description décrit un accélérateur systolique de réseau de neurones, l'accélérateur systolique comprenant un ensemble de processeurs élémentaires et un contrôleur propre à contrôler l'ensemble,
chaque processeur élémentaire comportant :
   - une première entrée propre à recevoir un premier élément,
   - une deuxième entrée propre à recevoir un deuxième élément,
   - une mémoire propre à mémoriser un troisième élément,
le premier élément, le deuxième élément et le troisième élément étant respectivement choisis parmi une donnée, un poids et une valeur,
   - une unité de calcul propre à appliquer un traitement sur la donnée, le poids et la valeur pour obtenir un résultat de calcul, et
   - une sortie propre à émettre le résultat de calcul,
chaque processeur élémentaire présentant au moins deux états, un état défaillant et un état non défaillant,
des processeurs élémentaires de l'ensemble de processeurs élémentaires (étant des processeurs élémentaires de test, chaque processeur élémentaire de test comportant :
   - un circuit de mise à zéro, le circuit de mise à zéro étant un circuit propre à imposer que la sortie du processeur élémentaire émette un signal nul lorsque le circuit de mise à zéro est activé,
   - un circuit de test, le circuit de test étant un circuit propre à tester un autre processeur élémentaire de l'ensemble de processeurs élémentaires, l'autre processeur élémentaire étant dit processeur élémentaire à tester,
le circuit de test présentant au moins deux configurations, une première configuration dans laquelle les entrées du processeur élémentaire de test sont propres à recevoir respectivement le premier élément du processeur élémentaire de test et le deuxième élément du processeur élémentaire de test et une deuxième configuration dans laquelle les entrées du processeur élémentaire de test sont propres à recevoir respectivement le premier élément du processeur élémentaire à tester et le deuxième élément du processeur élémentaire à tester,
le circuit de test étant propre à basculer dans la deuxième configuration lorsque le circuit de test est activé,
le circuit de test comportant un comparateur, le comparateur étant propre à comparer la valeur des sorties du processeur élémentaire de test et du processeur élémentaire à tester, pour obtenir un résultat de comparaison, et
le contrôleur étant propre à effectuer un test de chaque processeur élémentaire à tester en :
   - activant le circuit de test et le circuit de mise à zéro du processeur élémentaire de test,
   - collectant le résultat de comparaison du comparateur, et
   - déterminant l'état du processeur élémentaire à tester en fonction du résultat de comparaison.

Selon des modes de réalisation particuliers, l'accélérateur systolique présente une ou plusieurs des caractéristiques suivantes, prise(s) isolément ou selon toutes les combinaisons techniquement possibles :
- chaque processeur élémentaire à tester par un processeur élémentaire de test est un processeur adjacent au processeur élémentaire de test.
- chaque processeur élémentaire à tester comporte également un circuit de mise à zéro, le circuit de mise à zéro étant un circuit propre à imposer que la sortie du processeur élémentaire émette un signal nul lorsque le circuit de mise à zéro est activé, le contrôleur étant propre à activer le circuit de mise à zéro d'un processeur élémentaire à tester lorsqu'à l'issue d'un test, le contrôleur a déterminé que l'état du processeur élémentaire à tester est l'état défaillant.
- chaque circuit de test et chaque circuit de mise à zéro comprennent des multiplexeurs contrôlés par des signaux du contrôleur.
- le comparateur d'un processeur élémentaire de test est commun à plusieurs processeurs élémentaires de test.
- l'accélérateur systolique est un accélérateur systolique de réseau de neurones profond.
- l'accélérateur systolique est un accélérateur systolique de réseau de neurones entraîné itérativement par une technique de régularisation, la technique de régularisation étant une technique d'élimination d'un ou plusieurs neurones du réseau de neurones choisis aléatoirement lors de chaque itération d'un entraînement du réseau de neurones.
- le contrôleur est propre à effectuer un test de chaque processeur élémentaire à tester indépendamment de l'état du processeur élémentaire à tester, le contrôleur modifiant l'état défaillant d'un processeur élémentaire à tester en un état non défaillant lorsqu'à l'issue de plusieurs tests successifs, le contrôleur a déterminé que l'état du processeur élémentaire à tester est un état non défaillant.
- l'ensemble des processeurs élémentaires comportent des processeurs élémentaires périphériques, un processeur élémentaire périphérique étant un processeur de test d'un processeur élémentaire adjacent et ledit processeur élémentaire adjacent étant également un processeur élémentaire de test du même processeur élémentaire périphérique.
- le réseau de neurones est un ensemble de neurones propres à appliquer chacun un poids respectif, dit poids du réseau de neurones, des poids modifiés étant mémorisés dans une mémoire de l'accélérateur systolique, un contrôleur de mémoire étant propre à contrôler ladite mémoire, les poids mémorisés étant des poids modifiés pour lesquels au moins un bit de poids faible de poids du réseau de neurones a été modifié pour que les poids mémorisés vérifient un critère prédéfini, le contrôleur de mémoire étant propre à vérifier que les poids mémorisés vérifient ledit critère et à détecter la présence d'une erreur lorsque les poids mémorisés ne vérifient pas le critère.
- le critère est le respect d'une parité prédéterminée ou d'un codage prédéterminé.
- le contrôleur de mémoire est propre à mettre le poids mémorisé à une valeur nulle lorsque le contrôleur de mémoire a détecté la présence d'une erreur.

La description décrit un système électronique, notamment système électronique de véhicule, comportant au moins un accélérateur systolique tel que précédemment décrit.

La description décrit également un procédé de test de processeurs élémentaires à tester d'un accélérateur systolique de réseau de neurones, l'accélérateur systolique comprenant un ensemble de processeurs élémentaires, l'ensemble comprenant les processeurs élémentaires à tester et un contrôleur propre à contrôler l'ensemble,
chaque processeur élémentaire comportant :
   - une première entrée propre à recevoir un premier élément,
   - une deuxième entrée propre à recevoir un deuxième élément,
   - une mémoire propre à mémoriser un troisième élément,
le premier élément, le deuxième élément et le troisième élément étant respectivement choisis parmi une donnée, un poids et une valeur,
   - une unité de calcul propre à appliquer un traitement sur la donnée, le poids et la valeur pour obtenir un résultat de calcul, et
   - une sortie propre à émettre le résultat de calcul,
chaque processeur élémentaire présentant au moins deux états, un état défaillant et un état non défaillant,
des processeurs élémentaires de l'ensemble de processeurs élémentaires étant des processeurs élémentaires de test, chaque processeur élémentaire de test comportant :
   - un circuit de mise à zéro, le circuit de mise à zéro étant un circuit propre à imposer que la sortie du processeur élémentaire émette un signal nul lorsque le circuit de mise à zéro est activé,
   - un circuit de test, le circuit de test étant un circuit propre à tester un autre processeur élémentaire de l'ensemble de processeurs élémentaires, l'autre processeur élémentaire étant dit processeur élémentaire à tester,
le circuit de test présentant au moins deux configurations, une première configuration dans laquelle les entrées du processeur élémentaire de test sont propres à recevoir respectivement le premier élément du processeur élémentaire de test et le deuxième élément du processeur élémentaire de test et une deuxième configuration dans laquelle les entrées du processeur élémentaire de test sont propres à recevoir respectivement le premier élément du processeur élémentaire à tester et le deuxième élément du processeur élémentaire à tester,
le circuit de test étant propre à basculer dans la deuxième configuration lorsque le circuit de test est activé,
le circuit de test comportant un comparateur, le comparateur étant propre à comparer la valeur des sorties du processeur élémentaire de test et du processeur élémentaire à tester, pour obtenir un résultat de comparaison, et le procédé comprenant, pour chaque processeur élémentaire à tester, les étapes de :
   - activation par le contrôleur du circuit de test et du circuit de mise à zéro du processeur élémentaire de test dudit processeur élémentaire à tester,
   - collecter le résultat de comparaison du comparateur, et
   - déterminer l'état du processeur élémentaire à tester en fonction du résultat de comparaison.

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un exemple de système électronique comportant un accélérateur systolique,
- la figure 2 est une vue schématique de l'accélérateur systolique de la figure 1 comprenant un ensemble de processeur élémentaire,
- la figure 3 est une représentation schématique d'un exemple de réseau de neurones,
- la figure 4 est une représentation schématique de processeurs élémentaires de l'accélérateur systolique, et
- la figure 5 est une représentation schématique d'un autre exemple d'accélérateur systolique,

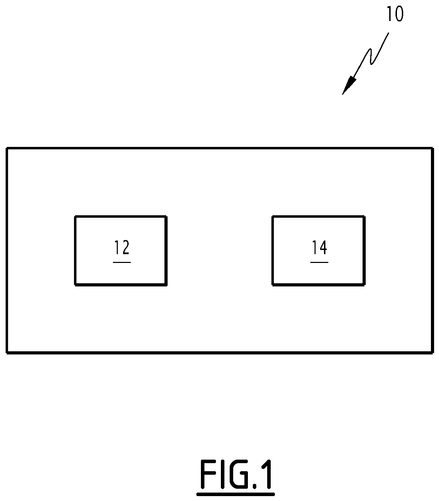

Un système électronique 10 est représenté schématiquement sur la figure 1.

Le système électronique 10 est un système électronique de véhicule.

Par exemple, le système électronique 10 est un système de vision.

Aussi, le système électronique 10 comporte un capteur 12 propre à acquérir des images (notamment de l'environnement du véhicule) et un dispositif d'analyse 14 des images du capteur 12 (notamment adapté pour détecter la présence d'un danger dans l'environnement).

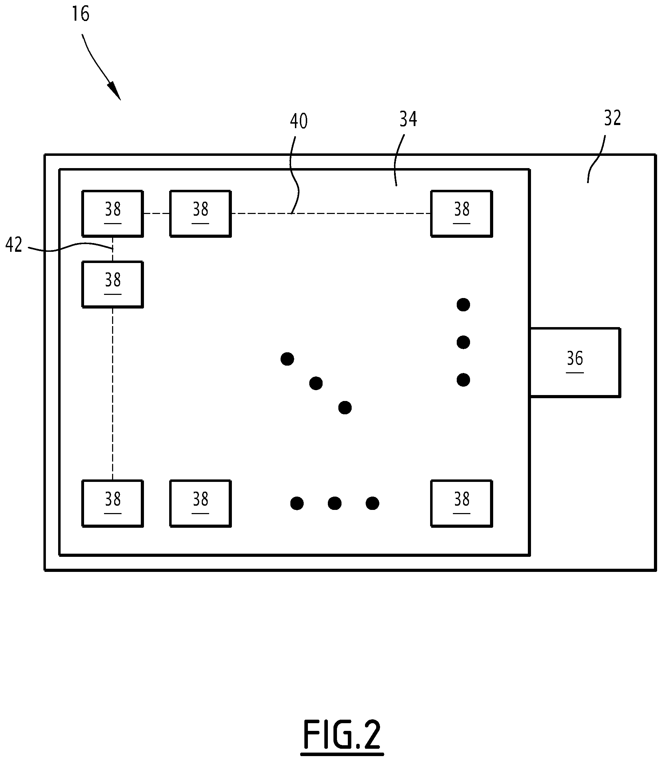

Le dispositif d'analyse 14 comporte en particulier un accélérateur systolique 16 de réseau de neurones tel que représenté schématiquement sur la figure 2.

L'accélérateur 16 est un accélérateur matériel de réseau de neurones.

Cela signifie que l'accélérateur 16 est un circuit électronique implémentant un réseau de neurones 18.

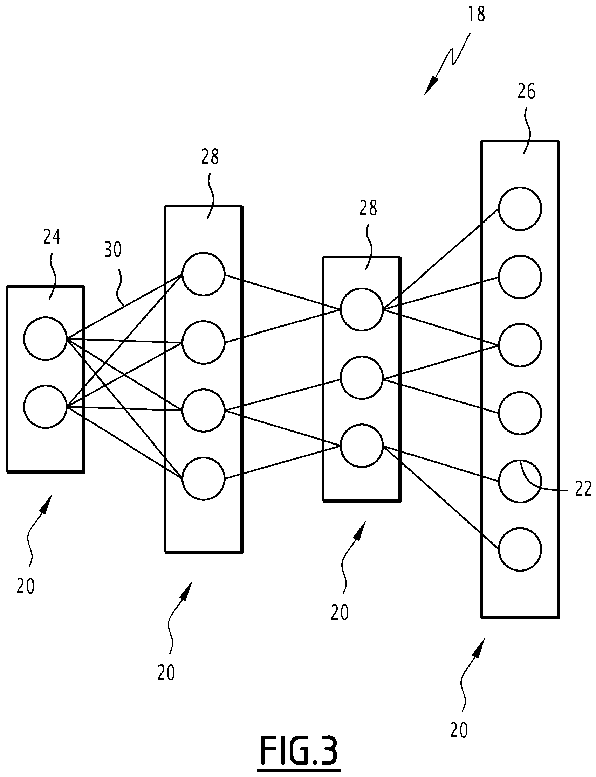

Un exemple particulier simple de réseau de neurones 18 est maintenant décrit en référence à la figure 3 pour introduire des notions qui seront utilisées dans la suite de la description.

Comme représenté sur cette figure, un réseau de neurones 18 est un ensemble de neurones 22.

Le réseau de neurones 18 comporte une succession ordonnée de couches 20 de neurones 22 dont chacune prend ses entrées sur les sorties de la couche 20 précédente.

Plus précisément, chaque couche 20 comprend des neurones 22 prenant leurs entrées sur les sorties des neurones 22 de la couche 20 précédente.

À chaque neurone 22 est également associée une opération, c'est-à-dire un type de traitement, à effectuer par ledit neurone 22 au sein de la couche 20 correspondante.

Dans un réseau de neurones 18, la première couche 20 de neurones 22 est appelée couche d'entrée 24 alors que la dernière couche 20 de neurones 22 est appelée couche de sortie 26. Les couches 20 de neurones 22 intercalées entre la couche d'entrée 24 et la couche de sortie 26 sont des couches de neurones cachées 28.

Chaque couche 20 est reliée par une pluralité de synapses 30. Un poids synaptique est associé à chaque synapse 30. C'est souvent un nombre réel, qui prend des valeurs positives comme négatives. De préférence, dans le contexte d'un accélérateur matériel, les poids synaptiques sont des entiers.

Chaque neurone 22 est propre à effectuer une somme pondérée des valeur(s) reçue(s) de la part des neurones 22 de la couche 20 précédente, chaque valeur étant alors multipliée par le poids synaptique respectif, puis à appliquer une fonction d'activation, typiquement une fonction non-linéaire, à ladite somme pondérée, et à délivrer aux neurones 22 de la couche 20 suivante la valeur résultant de l'application de la fonction d'activation. La fonction d'activation permet d'introduire une non-linéarité dans le traitement effectué par chaque neurone 22. La fonction sigmoïde, la fonction tangente hyperbolique, la fonction de Heaviside, la fonction Unité Linéaire Rectifiée (plus souvent désignée ReLU pour la dénomination anglaise correspondante de « *Rectified Linear Unit* ») sont des exemples de fonctions d'activation.

En complément facultatif, chaque neurone 22 est également apte à utiliser, en outre, un facteur additif, également appelé biais. La valeur délivrée aux neurones 22 de la couche 20 suivante est alors le résultat de l'application de la fonction d'activation à la somme du biais et de la somme pondérée.

Dans l'exemple décrit, la première couche cachée 28 est une couche entièrement connectée.

Une couche de neurones entièrement connectée est une couche dans laquelle les neurones de la couche sont chacun connectés à tous les neurones de la couche précédente.

Un tel type de couche est plus souvent dénommée selon le terme anglais de « *fully connected* » et parfois désignée sous la dénomination « couche dense ».

Les autres couches 26 et 28 sont des couches dites convolutives, c'est-à-dires de couches dans lesquelles un neurone n'est lié qu'à un certaines nombres de neurones, selon une sélection basée sur la localité du neurone

Selon l'exemple décrit, le réseau de neurones 18 est un réseau de neurones profond.

Un tel réseau de neurones profond est souvent qualifié de DNN, l'abréviation renvoyant à la terminologie anglaise correspondante de « *Deep Neural Network ».*

Par définition, un réseau de neurones est profond lorsque le réseau de neurones comporte plus d'une couche cachée (dans l'exemple décrit, le réseau de neurones comporte deux couches cachées 28).

L'exemple simple qui vient d'être décrit n'est pas limitatif et tout type de réseau de neurones peut être ici implémenté par l'accélérateur 16.

En particulier, il est possible d'envisager l'emploi d'une ou plusieurs couches récurrentes dans lesquelles un neurone est lié à sa propre couche dans un état précédent et à la couche précédente. Un tel réseau de neurones est parfois qualifié de récurrent et désigné par l'abréviation RRN qui renvoie à la dénomination anglaise correspondante de « *récurrent neural networks* »*.*

Dans d'autres réseaux de neurones, une ou des couches résiduelles sont présentes, une couche résiduelle étant une couche dans laquelle un neurone est lié à plusieurs couches précédentes.

Toute combinaison des couches précédentes est également envisageable, comme notamment des couches convolutives récurrentes.

On peut aussi envisager des couches ayant des fonctions différentes comme une ou plusieurs couches de mise en commun (par exemple, de moyennage, ou de « max pooling » en anglais).

Selon l'exemple décrit, l'accélérateur systolique 16 est réalisé sous la forme d'un circuit intégré, et notamment un circuit intégré propre à une application. Un tel circuit intégré est souvent désigné sous l'appellation ASIC qui renvoie à la dénomination anglaise de *« Application Spécifie Integrated Circuit ».*

Toutefois, ceci n'est pas limitatif et l'accélérateur systolique 16 peut également être un composant logique programmable.

L'accélérateur systolique 16 comprend un ensemble 34 de processeurs élémentaires 38 et un contrôleur 36 propre à contrôler l'ensemble 34.

Selon l'exemple de la figure 2, les processeurs élémentaires 38 sont organisés selon une matrice bidimensionnelle comportant des lignes 40 et des colonnes 42.

Une telle organisation permet que le contrôleur 36 obtienne une grille de processeurs élémentaires 38 fonctionnant de manière systolique.

Par le terme « systolique », il est entendu un fonctionnement similaire à celui d'une organisation de processeurs élémentaires 38 selon une grille à deux dimensions totalement remplies dans laquelle le processeur élémentaire 38 de coordonnées (i,j) reçoit à chaque cycle d'horloge d'une part une donnée que le processeur élémentaire 38 de cordonnées (i,j-1) avait reçue au cycle d'horloge précédent et/ou d'autre part une donnée que le processeur élémentaire 38 de coordonnées (i-1, j) avait reçue au cycle d'horloge précédent. Dans cette notation, i et j sont deux entiers et un processeur élémentaire 38 a les coordonnées (i,j) lorsque ledit processeur est positionné au croisement de la i-ième ligne 40 et de la j-ième colonne 42.

De manière plus générale, un fonctionnement est systolique lorsque les données circulent horizontalement, verticalement ou dans les deux sens.

Cette circulation de données n'exclut pas que d'autres données ou des signaux de contrôle puissent être diffusés de manière simultanée à tous les processeurs élémentaires 38.

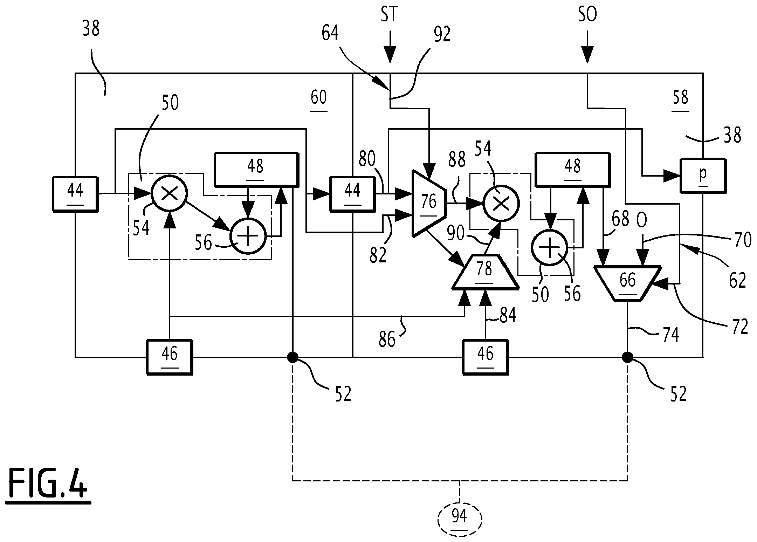

Comme visible sur la figure 4 qui représente deux processeurs élémentaires 38 adjacents, chaque processeur élémentaire 38 comporte deux entrées 44, 46, une mémoire 48, une unité de calcul 50 et une sortie 52.

La première entrée 44 est propre à recevoir une donnée.

Typiquement, dans l'exemple proposé d'un système de vision, la donnée est la valeur d'un pixel d'une image acquise par le capteur 12 pour le cas de la couche d'entrée 28 et est une valeur d'activation des couches précédentes pour les couches ultérieures. La deuxième entrée 46 est propre à recevoir un poids.

La mémoire 48 mémorise une valeur correspondant à la somme en cours de calcul.

L'unité de calcul 50 est propre à appliquer un traitement sur la donnée, le poids et la valeur pour obtenir un résultat de calcul.

En l'espèce, l'unité de calcul 50 comporte une sous-unité de multiplication 54 et une sous-unité de sommation 56.

La sous-unité de multiplication 54 est propre à multiplier deux valeurs incidentes pour obtenir en sortie 52 leur produit.

Dans le cas de la figure 4, la sous-unité de multiplication 54 multiplie la donnée de la première entrée 44 avec le poids pour obtenir une donnée pondérée.

La sous-unité de sommation 56 est propre à additionner deux valeurs incidentes pour obtenir en sortie 52 leur somme.

Ici, la sous-unité de sommation 56 additionne la somme antérieure des données pondérées mémorisées dans la mémoire 48 et la donnée pondérée de la sous-unité de multiplication 54 et obtient une nouvelle somme des données pondérées.

La nouvelle somme des données pondérées est le résultat de calcul de l'unité de calcul 50.

La sortie 52 du processeur élémentaire 38 est propre à émettre le résultat de calcul.

Le processeur élémentaire 38 de droite sur la figure 4 est un processeur élémentaire de test 58, plus spécifiquement un processeur élémentaire de test 58 du processeur élémentaire 38 adjacent qui est le processeur élémentaire 38 de gauche sur la figure 4. Le processeur élémentaire 38 de gauche est donc le processeur élémentaire à tester 60 dans le présent exemple.

Le processeur élémentaire de test 58 de la figure 4 comporte un circuit de mise à zéro 62 et un circuit de test 64.

Le circuit de mise à zéro 62 est un circuit propre à imposer que la sortie 52 du processeur élémentaire 38 émette un signal nul lorsque le circuit de mise à zéro 62 est activé.

Selon l'exemple de la figure 4, le circuit de mise à zéro 62 comporte un multiplexeur 66, dit multiplexeur de mise à zéro 66, intercalé entre la mémoire 48 du processeur élémentaire de test 58 et la sortie 52 du processeur élémentaire de test 58.

En l'espèce, le multiplexeur de mise à zéro 66 comporte deux entrées 68 et 70, une entrée de contrôle 72 et une sortie 74.

Le multiplexeur de mise à zéro 66 comporte une première entrée 68 reliée à la sortie 52 du processeur élémentaire de test 58 et une deuxième entrée 70 reliée à un signal nul.

L'entrée de contrôle 72 est propre à recevoir un signal d'activation qui sert de signal de commande du circuit de mise à zéro 62. Un tel signal d'activation peut ainsi être qualifié de signal de mise à zéro S0.

La valeur du signal de mise à zéro S0 permet de contrôler le signal sortant de la sortie 74 du multiplexeur de mise à zéro 66.

Typiquement, l'entrée de contrôle 72 est une entrée logique opérant selon deux valeurs, une valeur basse et une valeur haute.

La valeur basse correspond à une inactivation du circuit de mise à zéro 62, configuration dans laquelle la sortie 74 du multiplexeur de mise à zéro 66 (et donc la sortie 52 du processeur élémentaire de test 58 puisque celle-ci est reliée à la sortie 74 du multiplexeur de mise à zéro 66) est la valeur de la nouvelle somme des données pondérées.

La valeur haute correspond à une activation du circuit de mise à zéro 62, configuration dans laquelle les sorties 74 et 52 du multiplexeur de mise à zéro 66 et du processeur élémentaire de test 58 émettent un signal nul.

Cela signifie que, selon la valeur du signal de mise à zéro S0, la sortie 74 du multiplexeur de mise à zéro 66 est soit la valeur de la nouvelle somme des données pondérées soit un signal nul.

De ce fait, le circuit de mise à zéro 62 peut être vu comme un circuit de masquage dans la mesure où le circuit de masquage masque pour les autres éléments de l'accélérateur systolique 16 le résultat des opérations effectuées par le processeur élémentaire de test 58.

Le circuit de test 64 est un circuit propre à tester un autre processeur élémentaire 38 de l'ensemble 34 de processeurs élémentaires 38, ici le processeur élémentaire à tester 60.

Le circuit de test 64 présente au moins deux configurations : une première configuration et une deuxième configuration.

Dans la première configuration, les entrées du processeur élémentaire de test 58 sont propres à recevoir respectivement la donnée à traiter du processeur élémentaire de test 58 et les poids à appliquer du processeur élémentaire de test 58. La première configuration correspond à un fonctionnement usuel du processeur élémentaire de test 58.

Dans la deuxième configuration, les entrées du processeur élémentaire de test 58 sont propres à recevoir respectivement la donnée à traiter du processeur élémentaire à tester 60 et les poids à appliquer du processeur élémentaire à tester 60. La deuxième configuration correspond à un fonctionnement de test pour le processeur élémentaire de test 58.

Selon l'exemple de la figure 4, pour obtenir un fonctionnement avec les deux configurations précitées, le circuit de test 64 comporte deux multiplexeurs de test 76 et 78.

Comme pour le cas du circuit de mise à zéro 62, chacun des deux multiplexeurs de tests 76 et 78 sont également des multiplexeurs à deux entrées.

Le premier multiplexeur de test 76 comporte une entrée 80 reliée à la première entrée 44 du processeur élémentaire de test 58 et une entrée 82 reliée à la première entrée 44 du processeur élémentaire à tester 60.

Le deuxième multiplexeur de test 78 comporte une entrée 84 reliée à la deuxième entrée 46 du processeur élémentaire de test 58 et une entrée 86 reliée à la deuxième entrée 46 du processeur élémentaire à tester 60 (celui de gauche sur la figure 4).

Les sorties 88 et 90 des deux multiplexeurs sont reliées chacune à la sous-unité de multiplication 54 du processeur élémentaire de test 58.

Dans l'exemple de la figure 4, chacun du premier multiplexeur de test 76 et du deuxième multiplexeur de test 78 partagent la même entrée de contrôle 92.

L'entrée de contrôle 92 est propre à recevoir un signal d'activation qui sert de signal de commande du circuit de test 64. Le signal d'activation peut ainsi être qualifié de signal de test ST.

La valeur du signal de test ST permet de contrôler le signal sortant de la sortie 88 et 90 de chaque multiplexeur de test 76 et 78.

Typiquement, l'entrée de contrôle 92 est une entrée logique opérant selon deux valeurs, une valeur basse et une valeur haute.

La valeur basse correspond à une inactivation du circuit de test 64 dans laquelle le circuit de test 64 est dans la première configuration tandis que la valeur haute correspond à une activation du circuit de test 64 dans laquelle le circuit de test 64 est dans la deuxième configuration.

Autrement formulé, le circuit de test 64 est propre à basculer dans la deuxième configuration lorsque le circuit de test 64 est activé.

De manière alternative, il peut être considéré que la valeur du signal de test ST permet de contrôler l'opération effectuée par la sous-unité de multiplication 54 du processeur élémentaire de test 58.

Lorsque le signal de test ST est un signal d'inactivation du circuit de test 64, l'opération effectuée par la sous-unité de multiplication 54 du processeur élémentaire de test 58 est la multiplication de la donnée reçue par la première entrée 44 du processeur élémentaire de test 58 et le poids reçu par la deuxième entrée 46 du processeur élémentaire de test 58.

Réciproquement, lorsque le signal de test ST est un signal d'activation du circuit de test 64, l'opération effectuée par la sous-unité de multiplication 54 du processeur élémentaire de test 58 est la multiplication de la donnée reçue par la première entrée 44 du processeur élémentaire à tester 60 et le poids reçu par la deuxième entrée 46 du processeur élémentaire à tester 60.

Le circuit de test 64 comporte un comparateur 94 (représenté en pointillés sur la figure 4).

Le comparateur 94 est propre à comparer la valeur des sorties 52 du processeur élémentaire de test 58 et du processeur élémentaire à tester 60, pour obtenir un résultat de comparaison.

La comparaison a lieu dans la deuxième configuration, configuration dans laquelle les deux processeurs élémentaires 38 (à tester et de test) effectuent exactement le même calcul et doivent en fonctionnement normal donner le même résultat.

Autrement formulé, lorsque le résultat de comparaison correspond à deux valeurs identiques, il est conclu que le processeur élémentaire à tester 60 est dans un état non défaillant, c'est-à-dire qu'aucun défaut de fonctionnement du processeur élémentaire à tester 60 n'a été détecté.

A contrario, lorsque le résultat de comparaison correspond à deux valeurs différentes, il peut être conclu que le processeur élémentaire à tester 60 est dans un état défaillant, c'est-à-dire qu'au moins un défaut de fonctionnement du processeur élémentaire à tester 60 a été détecté.

Un tel processeur élémentaire de test 58 peut avantageusement être utilisé pour améliorer le fonctionnement de l'accélérateur systolique 16 comme cela va maintenant être illustré en référence à plusieurs utilisations.

Selon une première utilisation découlant directement du fonctionnement qui vient d'être décrit pour un processeur élémentaire de test 58, le contrôleur 36 effectue un test de chaque processeur élémentaire à tester 60 en effectuant une suite d'opérations simples.

D'abord, le contrôleur 36 active le circuit de test 64 et le circuit de mise à zéro 62 du processeur élémentaire de test 60 en envoyant un signal S0 ou ST à chacune des entrées de contrôle 72 et 92 d'un multiplexeur 66, 76 et 78 de ces deux circuits 62 et 64.

Il peut être signalé ici que le contrôleur 36 effectue cette opération sur un des processeurs élémentaires 38 et d'abord sur le premier.

Chacun des deux processeurs élémentaires 38 effectuent alors les mêmes opérations et le comparateur 94 comparent les sorties 52 des deux processeurs élémentaires 38 pour obtenir un résultat de comparaison.

Le contrôleur 36 collecte le résultat de comparaison et détermine l'état du processeur élémentaire à tester 60 en fonction du résultat de comparaison.

Il peut être précisé ici que, de préférence, le contrôleur 36 prend en compte plusieurs résultats de comparaison obtenus avec plusieurs cycles, afin d'obtenir un bon taux de couverture. Typiquement, le contrôleur 36 laisse le processeur élémentaire à tester 60 en état « à tester » tant que le nombre de tests prévus n'a pas été effectué.

Cela permet bien de détecter l'état du processeur à tester en fonctionnement de l'accélérateur systolique 16.

Il convient de comprendre que le fait qu'un processeur élémentaire 38 ait une sortie 52 mise à zéro impacte peu la précision finale du calcul de l'accélérateur systolique 16. En effet, le fait qu'un processeur élémentaire 38 soit parfaitement juste est peu important pourvu que le résultat final du réseau de neurones le soit.

De ce fait, avec un impact faible sur la précision, l'accélérateur systolique 16 est capable de tester chaque processeur élémentaire de test 60 en fonctionnement.

La deuxième utilisation est une conséquence directe de la détermination de la première utilisation.

Il est en outre supposé que chaque processeur élémentaire à tester 60 comporte également un circuit de mise à zéro 62, c'est-à-dire un circuit propre à imposer que la sortie 52 du processeur élémentaire 38 émette un signal nul lorsque le circuit de mise à zéro 62 est activé.

Lorsqu'un processeur élémentaire à tester 60 a été détecté comme étant dans un état défaillant, le circuit de mise à zéro 62 est activé par envoi d'un signal de mise à zéro S0 par le contrôleur 36.

Il en résulte que la sortie 52 du processeur élémentaire 38 défaillant est mise à 0.

Cette deuxième utilisation permet de pallier la défaillance du processeur élémentaire à tester 60 tout en permettant à l'accélérateur systolique 16 de continuer à fonctionner.

De fait, l'activation du circuit de mise à zéro 62 permet d'éviter qu'une sortie 52 erronée du processeur élémentaire 38 impacte le résultat final de l'accélérateur systolique 16 en le rendant aberrant. Cette précaution s'accompagne d'une perte minimale dans la précision de l'accélérateur systolique 16 en présence d'un processeur élémentaire 38 fautif.

Selon une troisième utilisation, chaque processeur élémentaire 38 est testé par le contrôleur 36 indépendamment de son état (défaillant ou non) à chaque mise en oeuvre d'un test de l'accélérateur systolique 16.

Cela permet d'ailleurs que les tests soient effectués de manière régulière simplement puisque la matrice de processeurs élémentaires 38 reste ainsi identique. Notamment, il suffit d'une simple horloge pour indiquer que le test est à mettre en oeuvre et non d'attendre que le contrôleur 36 ou un autre composant détermine qu'il faut mettre en oeuvre le test d'un processeur élémentaire 38 selon une règle complexe. Bien entendu, le cadencement de l'horloge est synchronisé avec l'utilisation des processeur élémentaire 38. Ainsi, la mise en oeuvre du test commence avant que les calculs des deux processeurs élémentaire 38 (de test et à tester) soient commencées pour éviter les erreurs de calculs.

Lorsque plusieurs tests successifs d'un même processeur élémentaire 38 considéré comme étant dans un état défaillant conduisent à déterminer que ledit processeur élémentaire 38 est dans un état normal, il est considéré que l'état défaillant détecté est une défaillance transitoire et le circuit de mise à zéro 62 est désactivé par modification de la valeur du signal de mise à zéro S0.

Le nombre d'itérations successives est supérieur ou égal à 2, typiquement supérieur ou égal à 4, ou encore supérieur ou égal à 10.

Cela permet d'éviter qu'un processeur élémentaire 38 présentant un défaut transitoire soit considéré comme un processeur élémentaire 38 présentant un défaut permanent. En effet, une mise à zéro inutile d'un processeur élémentaire 38 résulte en une perte de précision du résultat de l'accélérateur systolique 16.

Chacune des trois utilisations qui viennent d'être décrites peuvent être avantageusement combinées dans un procédé de test des processeurs élémentaires 38 de l'accélérateur systolique 16.

Des tests de simulation ont été effectués par la demanderesse sur des réseaux de neurones 22 de taille réelle pour démontrer l'efficacité de détection de défaillances. Ces simulations ont été effectuées pour une application de classification d'images.

Plus précisément, les tests de simulation ont portée sur une matrice de 256 (16*16) processeurs élémentaires 38 exécutant le réseau SqueezeNetV1.0. Cela vaut pour tous les résultats présentés dans la suite du texte.

Cela permet en particulier d'obtenir une perte de précision de seulement 10 % pour quatre processeurs élémentaires 38 défaillants. Par comparaison, la structure originale chute de 40% avec un seul bit de sortie défaillant.

Il peut également être mentionné que, pour un seul processeur élémentaire 38 défaillant, la perte de précision est de seulement 3% alors qu'elle est de 15% à 33% sans la présente architecture de test.

Il résulte de ces tests de simulation qu'un tel procédé de test permet de détecter les défaillances des processeurs élémentaires 38 tout en permettant à l'accélérateur systolique 16 de continuer à fonctionner avec une faible baisse de précision.

Le procédé de test permet de détecter rapidement des défaillances qui impactent la précision de l'accélérateur systolique 16 de réseau de neurones.

Un tel procédé de test permet ainsi une détection des défaillances en temps-réel des processeurs élémentaires 38.

En outre, le procédé de test est capable de distinguer entre les pannes (défaillances permanentes) et les défaillances transitoires d'un processeur élémentaire 38 et de prendre des mesures différentes en fonction du type de défaillance du processeur élémentaire 38.

Ainsi, le procédé de test permet également de dégrader graduellement la précision des calculs du réseau de neurones 18 en fonction du nombre de défaillances détectées.

Le procédé de test est un élément qui permet de répondre à certaines exigences des normes de sûreté, dont notamment la norme ISO 26262.

Par ailleurs, le procédé de test implique un surcoût matériel limité par rapport aux techniques de redondance matérielle, typiquement 8% à comparer à plus de 100% pour des approches de redondance classiques.

Ainsi, l'accélérateur systolique 16 de réseau de neurones permettant de respecter des critères de fiabilité impliquant moins de ressources matérielles ou énergétiques.

En variante ou en complément, il est favorable d'utiliser un réseau de neurones 18 appris spécifiquement.

L'accélérateur systolique 16 est alors un accélérateur systolique de réseau de neurones 18 entraîné itérativement par une technique de régularisation, la technique de régularisation étant une technique d'élimination d'un ou plusieurs neurones 22 du réseau de neurones 18 choisis aléatoirement lors de chaque itération d'un entraînement du réseau de neurones 18.

Plus précisément, les paramètres libres d'un réseau de neurones 18 sont appris selon une technique d'apprentissage comportant plusieurs itérations et lors de chaque itération, au moins un neurone 22 est éliminé selon une technique dite de « drop out » (terminologie anglaise correspondant à élimination).

Cette technique est généralement utilisée pour éviter le phénomène de « sur-apprentissage » permet ici d'augmenter la fiabilité.

Pour illustrer ce point, un exemple est détaillé en supposant que le réseau de neurones 18 à apprendre présente l'architecture à deux couches cachées 28 de la figure 3.

A la première itération d'apprentissage, il est par exemple éliminé le neurone 22 en haut de la première couche cachée 28. Cela signifie que le réseau de neurones 18 lors de cette itération d'apprentissage présente une architecture différente dans laquelle le réseau de neurones comporte uniquement trois neurones 22 dans la première couche cachée 28 et non quatre neurones 22. Cela est simplement obtenu en modifiant la valeur du résultat de sortie du ou des neurones 22 concernés après application de la fonction d'activation.

Lors de la deuxième itération, il est par exemple éliminé le neurone 22 en haut de la deuxième couche cachée 28. Cela signifie que le réseau de neurones 18 lors de cette itération d'apprentissage présente une architecture différente dans laquelle le réseau de neurones comporte uniquement deux neurones 22 dans la deuxième couche cachée 28 et non trois neurones 22. Il est à noter que, lors de cette deuxième itération, la première couche cachée 28 présente les quatre neurones 22 visibles sur la figure 3.

L'emploi d'une telle technique d'apprentissage permet d'obtenir un réseau de neurones 18 appris avec une perte de précision faible voire nulle si un ou plusieurs neurones 22 ne sont pas fonctionnels.

Le réseau de neurones 18 appris permet ainsi d'augmenter la robustesse du réseau de neurones à une déficience d'un neurone 22.

Comme dans l'accélérateur systolique 16 décrit, il y a une correspondance entre un neurone 22 et un processeur élémentaire 38, cela signifie qu'un accélérateur systolique 16 implémentant un tel réseau de neurones 18 présente une meilleure robustesse aux déficiences d'un processeur élémentaire 38.

Il convient de souligner que cette robustesse de l'accélérateur systolique 16 est obtenue sans aucune connaissance a priori des défaillances des processeurs élémentaires 38. C'est donc une robustesse relativement aisée à obtenir au regard du fait qu'elle est valable pour tous les types de défaillance.

Dans les tests effectués par la demanderesse, la fiabilité de l'accélérateur systolique 16 permet d'obtenir une augmentation de précision de l'ordre de 5% pour quatre processeurs élémentaires 38 défaillants.

Pour renforcer la fiabilité, l'accélérateur systolique 16 peut également effectuer des tests d'autres éléments.

En l'espèce, c'est à l'aide d'une surveillance des poids mémorisés que l'accélérateur systolique 16 est capable d'obtenir une meilleure fiabilité.

Lorsque le réseau de neurones 18 est appris, chaque neurone 22 est associé à un poids respectif, dit poids du réseau de neurones 18.

Il est proposé de
modifier au moins un bit de poids faible de poids du réseau de neurones 18 pour que les poids utilisés vérifient un critère prédéfini.

Autrement formulé, le bit de poids faible d'au moins un poids est ajusté pour que les poids vérifient une condition prédéfinie.

Un bit de poids faible est le bit ayant le plus petit poids dans une représentation binaire. Un tel bit est plus souvent désigné sous l'abréviation « LSB » renvoyant à la dénomination anglaise correspondante de « *Least Significant Bit* »*.* L'abréviation « LSD » renvoyant à la dénomination anglaise correspondante de « *Least Significant Digit* » est également parfois utilisée.

Ces poids ainsi ajustés sont mémorisés dans une mémoire de l'accélérateur systolique 16, mémoire de poids qui est elle-même contrôlée par un contrôleur de mémoire.

Le contrôleur de mémoire est alors propre à vérifier que les poids mémorisés vérifient ledit critère.

Le contrôleur de mémoire détecte la présence d'une erreur lorsque les poids mémorisés ne vérifient pas le critère.

Selon un exemple, la condition prédéfinie est une condition de parité.

La condition de parité peut être d'être pair ou impair.

Dans un mode de réalisation, le bit de poids faible de chaque poids est potentiellement modifié.

Plus précisément, si la condition de parité est d'être pair, chaque bit de poids faible d'un poids qui est impair est modifié pour que le poids résultant soit pair.

Ainsi, les poids mémorisés sont soit des poids du réseau de neurones 18 (ceux qui étaient pairs) soit des poids du réseau de neurones 18 avec un bit de poids faible modifié (ceux qui étaient impairs).

Lorsqu'à l'issue d'un test de vérification, il est déterminé qu'un poids mémorisé est impair, le contrôleur de mémoire impose que ce poids mémorisé soit à zéro.

En effet, il est impossible de connaître la valeur correcte que devrait avoir le poids.

Il est ainsi exploité le fait que la précision totale du réseau de neurones 18 est peu sensible au fait qu'un seul poids soit mis à zéro ou légèrement modifié (passé d'impair à pair). La perte de précision résultant de cette mise à zéro est moins pénalisante qu'une valeur aberrante de poids qui viendrait rendre le calcul complet de l'accélérateur systolique 16 aberrant.

Une telle utilisation de la parité permet donc d'augmenter la fiabilité au prix d'une légère baisse de précision même en l'absence de défaillances.

Une telle technique peut donc être qualifiée d'utilisation opportuniste de la parité.

Selon un autre de réalisation, la parité est vérifiée sur un groupe de N poids.

N est un entier compris entre 2 et 32.

Dans un tel mode de réalisation, il suffit de modifier un seul bit de poids faible du groupe de N poids.

L'entier N est, de préférence, choisi pour correspondre au nombre de poids mémorisé dans un mot mémoire d'une mémoire.

Typiquement, un mot mémoire fait 128 bits, de sorte que pour un poids de 32 bits, il pourra être choisi un entier N de 4.

Différentes techniques peuvent être envisagées pour sélectionner la valeur de poids à modifier dans le groupe de N poids

Une première technique de sélection est de choisir le poids du groupe ayant la plus grande valeur absolue.

Une deuxième technique de sélection est de choisir le poids qui est le moins critique vis-à-vis d'une défaillance, cette criticité pouvant notamment être obtenue par simulation.

Il peut être envisagé de combiner les techniques de sélection précitées, par exemple en utilisant une technique de sélection comme technique de sélection principale et une autre technique de sélection si plusieurs poids vérifient le critère de la technique de sélection principale.

Le contrôleur de mémoire vérifie alors pour chaque groupe si le critère est vérifié par le groupe.

Dans un tel cas, lorsqu'à l'issue d'un test de vérification, il est déterminé qu'un groupe de poids ne respecte pas la parité, le contrôleur de mémoire impose que l'ensemble des poids du groupe soit mis à zéro.

Il est à noter que la vérification peut être mise en oeuvre à tout moment, et notamment lorsque le calcul du réseau de neurones est en cours.

Là encore, une telle utilisation de la parité permet donc d'augmenter la fiabilité au prix d'une légère baisse de précision.

Selon encore un autre mode de réalisation, au lieu du critère de parité, il peut être utilisé un test de respect d'un codage prédéterminé.

Un exemple d'un tel autre critère est maintenant détaillé.

À titre d'exemple, considérons le cas où les poids ont une largeur de 8 bits et sont stockés dans des groupes de 8 mots (groupe de 64 bits).

Supposons que ce groupe de poids est protégé par un code de correction d'erreur Un code correcteur d'erreur est souvent désigné par l'acronyme ECC qui renvoie à la dénomination anglaise correspondante de « error correcting code ».

Si, le code correcteur d'erreur est un code de Hamming, les bits de poids faibles des poids peuvent être remplacés par le code de Hamming.

Cela permet de corriger toutes les erreurs sur un seul bit dans le groupe de N = 8 poids. Des erreurs de double bit peuvent être détectées. La disposition est indiquée dans le tableau ci-dessous.

**[Table 1]**

| **Mot 7** | | **Mot 6** | | **Mot 5** | | **Mot 4** | | **Mot 3** | | **Mot 2** | | **Mot 1** | | **Mot 0** | |
|---|---|---|---|---|---|---|---|---|---|---|---|---|---|---|---|
| 7:1 | 0 | 7:1 | 0 | 7:1 | 0 | 7:1 | 0 | 7:1 | 0 | 7:1 | 0 | 7:1 | 0 | 7:1 | 0 |
| W7 [7: 0] | ECC7 | W6 [7: 0] | ECC6 | W5 [7: 0] | ECC5 | W4 [7: 0] | ECC4 | W3 [7: 0] | ECC3 | W2 [7: 0] | ECC2 | W1 [7: 0] | ECC1 | W 0 [7: 0] | ECC20 |

Dans l'exemple précédent, les bits de poids faible des huit poids (c'est-à-dire tous les poids) du groupe ont été modifiés, ce qui est correspond à une réduction de la précision des poids à 7 bits.

Néanmoins, avec une valeur N plus grande (par exemple N = 16), seuls 9 bits de code de correction sont impliqués, de sorte que donc tous les bits de poids faible n'ont pas besoin d'être modifiés.

L'exemple qui vient d'être décrit n'est pas limitatif et tout type de codage peut être envisagé. En particulier, les codages de type SECDED sont avantageux. L'abréviation SECDED renvoie à la dénomination anglaise correspondante de « Single Error Correct, Double Error Detect » qui signifie littéralement une seule erreur corrigée, une double erreur détectée.

Là encore, il s'agit d'un emploi opportuniste de la faible sensibilité du réseau de neurones 18 à la modification légère d'un poids.

Il convient également de noter qu'une technique traditionnelle de code correcteur d'erreurs implique typiquement une surcharge de l'ordre de 12% de la quantité d'informations mémorisées. Au contraire, la présente technique n'implique aucun surcoût en termes de taille mémoire du fait que le code correcteur est compris dans la donnée elle-même, ce qui est favorable dans le contexte des applications embarquées.

D'autres modes de réalisation peuvent aussi être envisagés pour favoriser la compatibilité de l'accélérateur systolique 16 avec les contraintes des systèmes embarqués.

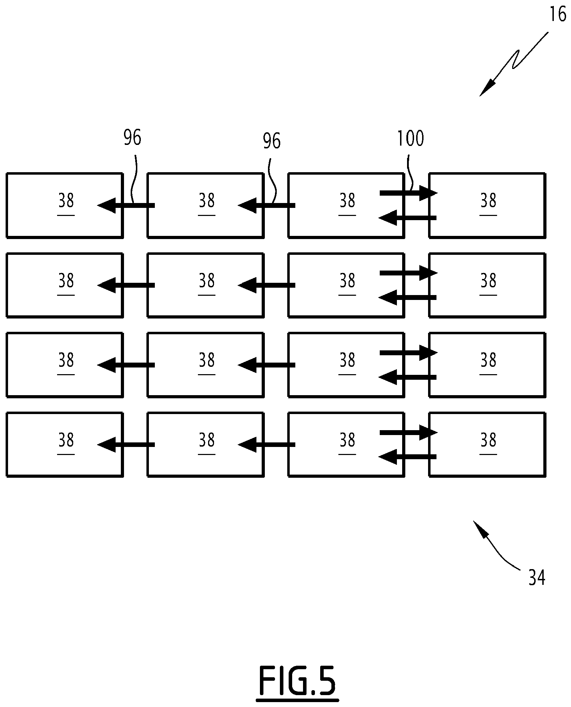

Par exemple, il est favorable que le processeur élémentaire 38 testé par un processeur élémentaire de test 58 soit le processeur adjacent au processeur élémentaire de test 58 situé sur la même ligne 40. C'est notamment le cas sur la figure 5 comme le montre très schématiquement les flèches 96.

Cela permet de réduire l'encombrement par rapport à une configuration où les processeurs élémentaires 38 testés ne sont pas à côté les uns des autres.

En variante ou en complément, comme représenté schématiquement à la figure 5, les agencements de tests pour les processeurs élémentaires périphériques 38 de l'ensemble 34 des processeurs élémentaires 38 sont un peu spécifiques. Les processeurs élémentaires périphériques 38 sont des processeurs élémentaires 38 situés à une extrémité d'une ligne 40 ou d'une colonne 42.

Dans un tel cas, un processeur élémentaire périphérique 38 est un processeur de test d'un processeur élémentaire 38 adjacent et ledit processeur élémentaire 38 adjacent étant également un processeur de test du même processeur élémentaire périphérique 38. Cela est schématisé par des doubles flèches 100 sur la figure 5.

Autrement formulé, le processeur élémentaire périphérique 38 et le processeur élémentaire 38 immédiatement adjacent sont bidirectionnels.

Un tel choix évite l'emploi de longs fils qui s'enroulent sur toute la largeur de l'accélérateur systolique 16. Cette flexibilité de test dans les deux sens est obtenue à l'aide de multiplexeurs supplémentaires, mais ceux-ci sont moins encombrants que les longs fils.

Pour gagner encore de l'encombrement, il est envisageable que le comparateur 94 d'un processeur élémentaire de test 58 soit commun à plusieurs processeurs élémentaires de test 58.

Enfin, selon l'exemple de la figure 4, chaque circuit de test 64 et chaque circuit de mise à zéro 62 comprennent des multiplexeurs 66, 76 et 78 contrôlés par des signaux S0 et ST du contrôleur 36.

Néanmoins, n'importe quel composant permettant de réaliser un basculement entre plusieurs configurations de branchement est envisageable pour l'accélérateur systolique 16.

Selon d'autres modes de réalisation, chaque neurone 22 utilise un biais. Dans un tel cas, la somme partielle est initialisée avec ce biais.

Par ailleurs, l'accélérateur systolique 16 décrit jusqu'à présent est un accélérateur de type « *output stationary* » (sortie stationnaire).

Il est également possible d'autres types d'architecture systolique.

Par exemple, si l'architecture choisie est une architecture de type « *weight stationary* » (poids stationnaire), il suffit de modifier l'agencement de l'unité de calcul 50 pour obtenir un fonctionnement similaire alternatif où les activations et les sommes partielles se déplacent dans le réseau systolique. Les méthodes de tests décrits ci-dessous peuvent également s'appliquer à une telle architecture.

Dans un tel cas, la mémoire 48 mémoriserait un poids et la deuxième entrée 46 recevrait la somme pondérée. Les branchements de la mémoire 48 sont alors différents mais les opérations effectuées sont identiques. Ainsi, de manière générale, chaque processeur élémentaire 38 comporte une première entrée 44 propre à recevoir un premier élément, une deuxième entrée 46 propre à recevoir un deuxième élément et une mémoire 48 propre à mémoriser un troisième élément et le premier élément, le deuxième élément et le troisième élément sont respectivement choisis parmi une donnée, un poids et une valeur.

Autrement formulé, en notant D1 la somme partielle du neurone, D2 le poids synaptique et D3 l'entrée de couche précédente ou les données de capteur, toutes les architectures systoliques ont en commun de prendre en entrée deux entrées à deux valeurs possibles gérée chacune par un multiplexeur contrôlé par le même signal. Les deux entrées choisies parmi les éléments D1, D2 et D3. Les architectures systoliques partagent aussi un comparateur et une mémoire locale au processeur élémentaire qui mémorise un des éléments D1, D2 ou D3, l'élément étant identique entre les mémoires locales du processeur élémentaire à tester et de test.

Dans chacun des modes de réalisation précités qui peuvent être combinés pour former de nouveaux modes de réalisation lorsque cela est techniquement possible, l'accélérateur systolique 16 est capable de détecter des défaillances matérielles et d'en atténuer l'impact.

Un tel accélérateur systolique 16 de réseau de neurones permet donc de respecter des critères de fiabilité tout en impliquant moins de ressources matérielles ou énergétique.

Cela rend l'accélérateur systolique 16 adapté pour de multiples applications.

En effet, bien qu'à titre d'illustration, l'accélérateur systolique 16 a été décrit pour le cas d'une application à la vision pour conduite autonome. Il peut être utilisé pour traiter d'autres types de données, comme des données radar ou lidar.

L'accélérateur systolique 16 pourrait également avantageusement être utilisé pour des systèmes avioniques ou spatiaux (notamment des satellites).

## Revendications

1. Accélérateur systolique (16) de réseau de neurones (18), l'accélérateur systolique (16) comprenant un ensemble (34) de processeurs élémentaires (38) et un contrôleur (36) propre à contrôler l'ensemble (34),
chaque processeur élémentaire (38) comportant :
- une première entrée (44) propre à recevoir un premier élément,
- une deuxième entrée (46) propre à recevoir un deuxième élément,
- une mémoire (48) propre à mémoriser un troisième élément,
le premier élément, le deuxième élément et le troisième élément étant respectivement choisis parmi une donnée, un poids et une valeur,
- une unité de calcul (50) propre à appliquer un traitement sur la donnée, le poids et la valeur pour obtenir un résultat de calcul, et
- une sortie (52) propre à émettre le résultat de calcul,
chaque processeur élémentaire (38) présentant au moins deux états, un état défaillant et un état non défaillant,
**caractérisé en ce que** des processeurs élémentaires (38) de l'ensemble (34) de processeurs élémentaires (38) sont des processeurs élémentaires de test (58), chaque processeur élémentaire de test (58) comportant :
- un circuit de mise à zéro (62), le circuit de mise à zéro (62) étant un circuit propre à imposer que la sortie (52) du processeur élémentaire (38) émette un signal nul lorsque le circuit de mise à zéro (62) est activé,
- un circuit de test (64), le circuit de test (64) étant un circuit propre à tester un autre processeur élémentaire (38) de l'ensemble (34) de processeurs élémentaires (38), l'autre processeur élémentaire (38) étant dit processeur élémentaire à tester (60), le circuit de test (64) présentant au moins deux configurations, une première configuration dans laquelle les entrées (44, 46) du processeur élémentaire de test (58) sont propres à recevoir respectivement le premier élément du processeur élémentaire de test (58) et le deuxième élément du processeur élémentaire de test (58) et une deuxième configuration dans laquelle les entrées du processeur élémentaire de test (58) sont propres à recevoir respectivement le premier élément du processeur élémentaire à tester (60) et le deuxième élément du processeur élémentaire à tester (60),
le circuit de test (64) étant propre à basculer dans la deuxième configuration lorsque le circuit de test (64) est activé,
le circuit de test (64) comportant un comparateur (94), le comparateur (94) étant propre à comparer la valeur des sorties (52) du processeur élémentaire de test (58) et du processeur élémentaire à tester (60), pour obtenir un résultat de comparaison, et
le contrôleur (36) étant propre à effectuer un test de chaque processeur élémentaire à tester (60) en :
- activant le circuit de test (64) et le circuit de mise à zéro (62) du processeur élémentaire de test (58),
- collectant le résultat de comparaison du comparateur (94), et
- déterminant l'état du processeur élémentaire à tester (60) en fonction du résultat de comparaison.

2. Accélérateur systolique selon la revendication 1, dans lequel chaque processeur élémentaire à tester (60) par un processeur élémentaire de test (58) est un processeur adjacent au processeur élémentaire de test (58).

3. Accélérateur systolique selon la revendication 1 ou 2, dans lequel chaque processeur élémentaire à tester (60) comporte également un circuit de mise à zéro (62), le circuit de mise à zéro (62) étant un circuit propre à imposer que la sortie (52) du processeur élémentaire (38) émette un signal nul lorsque le circuit de mise à zéro (62) est activé, le contrôleur (36) étant propre à activer le circuit de mise à zéro (62) d'un processeur élémentaire à tester (60) lorsqu'à l'issue d'un test, le contrôleur (36) a déterminé que l'état du processeur élémentaire à tester (60) est l'état défaillant.

4. Accélérateur systolique selon la revendication 3, dans lequel chaque circuit de test (64) et chaque circuit de mise à zéro (62) comprennent des multiplexeurs (66, 76, 78) contrôlés par des signaux du contrôleur (36).

5. Accélérateur systolique selon l'une quelconque des revendications 1 à 4, dans lequel le comparateur (94) d'un processeur élémentaire de test (58) est commun à plusieurs processeurs élémentaires de test (58).

6. Accélérateur systolique selon l'une quelconque des revendications 1 à 5, dans lequel l'accélérateur systolique (16) est un accélérateur systolique de réseau de neurones profond.

7. Accélérateur systolique selon l'une quelconque des revendications 1 à 6, dans lequel l'accélérateur systolique (16) est un accélérateur systolique de réseau de neurones (18) entraîné itérativement par une technique de régularisation, la technique de régularisation étant une technique d'élimination d'un ou plusieurs neurones (22) du réseau de neurones (18) choisis aléatoirement lors de chaque itération d'un entraînement du réseau de neurones (18).

8. Accélérateur systolique selon l'une quelconque des revendications 1 à 7, dans lequel le contrôleur (36) est propre à effectuer un test de chaque processeur élémentaire à tester (60) indépendamment de l'état du processeur élémentaire à tester (60), le contrôleur (36) modifiant l'état défaillant d'un processeur élémentaire à tester (60) en un état non défaillant lorsqu'à l'issue de plusieurs tests successifs, le contrôleur (36) a déterminé que l'état du processeur élémentaire à tester (60) est un état non défaillant.

9. Accélérateur systolique selon l'une quelconque des revendications 1 à 8, dans lequel l'ensemble (34) des processeurs élémentaires (38) comportent des processeurs élémentaires périphériques (38), un processeur élémentaire périphérique (38) étant un processeur de test d'un processeur élémentaire (38) adjacent et ledit processeur élémentaire (38) adjacent étant également un processeur élémentaire de test (58) du même processeur élémentaire périphérique (38).

10. Accélérateur systolique selon l'une quelconque des revendications 1 à 8, dans lequel le réseau de neurones (18) est un ensemble de neurones (22) propres à appliquer chacun un poids respectif, dit poids du réseau de neurones (18), des poids modifiés étant mémorisés dans une mémoire de l'accélérateur systolique (16), un contrôleur de mémoire étant propre à contrôler ladite mémoire, les poids mémorisés étant des poids modifiés pour lesquels au moins un bit de poids faible de poids du réseau de neurones (18) a été modifié pour que les poids mémorisés vérifient un critère prédéfini, le contrôleur de mémoire étant propre à vérifier que les poids mémorisés vérifient ledit critère et à détecter la présence d'une erreur lorsque les poids mémorisés ne vérifient pas le critère.

11. Accélérateur systolique selon la revendication 10, dans lequel le critère est le respect d'une parité prédéterminée ou d'un codage prédéterminé.

12. Accélérateur systolique selon la revendication 10 ou 11, dans lequel, le contrôleur de mémoire est propre à mettre le poids mémorisé à une valeur nulle lorsque le contrôleur de mémoire a détecté la présence d'une erreur.

13. Système électronique (10), notamment système électronique de véhicule, comportant au moins un accélérateur systolique (16) selon l'une quelconque des revendications 1 à 12.

14. Procédé de test de processeurs élémentaires à tester (60) d'un accélérateur systolique (16) de réseau de neurones (18), l'accélérateur systolique (16) comprenant un ensemble (34) de processeurs élémentaires (38), l'ensemble (34) comprenant les processeurs élémentaires à tester (60) et un contrôleur (36) propre à contrôler l'ensemble (34),
chaque processeur élémentaire (38) comportant :
- une première entrée (44) propre à recevoir un premier élément,
- une deuxième entrée (46) propre à recevoir un deuxième élément,
- une mémoire (48) propre à mémoriser un troisième élément,
le premier élément, le deuxième élément et le troisième élément étant respectivement choisis parmi une donnée, un poids et une valeur,
- une unité de calcul (50) propre à appliquer un traitement sur la donnée, le poids et la valeur pour obtenir un résultat de calcul, et
- une sortie (52) propre à émettre le résultat de calcul,
chaque processeur élémentaire (38) présentant au moins deux états, un état défaillant et un état non défaillant,
**caractérisé en ce que** des processeurs élémentaires (38) de l'ensemble (34) de processeurs élémentaires (38) sont des processeurs élémentaires de test (58), chaque processeur élémentaire de test (58) comportant :
- un circuit de mise à zéro (62), le circuit de mise à zéro (62) étant un circuit propre à imposer que la sortie (52) du processeur élémentaire (38) émette un signal nul lorsque le circuit de mise à zéro (62) est activé,
- un circuit de test (64), le circuit de test (64) étant un circuit propre à tester un autre processeur élémentaire (38) de l'ensemble (34) de processeurs élémentaires (38), l'autre processeur élémentaire (38) étant dit processeur élémentaire à tester (60), le circuit de test (64) présentant au moins deux configurations, une première configuration dans laquelle les entrées (44, 46) du processeur élémentaire de test (58) sont propres à recevoir respectivement le premier élément du processeur élémentaire de test (58) et le deuxième élément du processeur élémentaire de test (58) et une deuxième configuration dans laquelle les entrées du processeur élémentaire de test (58) sont propres à recevoir respectivement le premier élément du processeur élémentaire à tester (60) et le deuxième élément du processeur élémentaire à tester (60),
le circuit de test (64) étant propre à basculer dans la deuxième configuration lorsque le circuit de test (64) est activé,
le circuit de test (64) comportant un comparateur (94), le comparateur (94) étant propre à comparer la valeur des sorties (52) du processeur élémentaire de test (58) et du processeur élémentaire à tester (60), pour obtenir un résultat de comparaison, et le procédé comprenant, pour chaque processeur élémentaire à tester (60), les étapes de :
- activation par le contrôleur (36) du circuit de test (64) et du circuit de mise à zéro (62) du processeur élémentaire de test (58) dudit processeur élémentaire à tester (60),
- collecter le résultat de comparaison du comparateur (94), et
- déterminer l'état du processeur élémentaire à tester (60) en fonction du résultat de comparaison.

## Patentansprüche

1. Systolischer Beschleuniger (16) für ein neuronales Netz (18), der systolische Beschleuniger (16) umfassend eine Anordnung (34) von elementaren Prozessoren (38) und eine Steuerung (36), die geeignet ist, um die Anordnung (34) zu steuern, jeder elementare Prozessor (38) umfassend:
- einen ersten Eingang (44), der geeignet ist, um ein erstes Element aufzunehmen,
- einen zweiten Eingang (46), der geeignet ist, um ein zweites Element aufzunehmen,
- einen Speicher (48), der geeignet ist, ein drittes Element zu speichern,
wobei das erste Element, das zweite Element und das dritte Element jeweils ausgewählt sind aus einem Datenwert, einem Gewicht und einem Wert,
- eine Recheneinheit (50), die geeignet ist, um eine Verarbeitung auf die Daten, das Gewicht und den Wert anzuwenden, um ein Rechenresultat zu erlangen, und
- einen Ausgang (52), der geeignet ist, um das Rechenresultat auszugeben,
wobei jeder elementare Prozessor (38) mindestens zwei Zustände aufweist, einen ausgefallenen Zustand und einen nicht ausgefallenen Zustand,
**dadurch gekennzeichnet, dass** elementare Prozessoren (38) der Anordnung (34) von elementaren Prozessoren (38) elementare Testprozessoren (58) sind, jeder elementare Testprozessor (58) umfassend:
- eine Nullsetzungsschaltung (62), wobei die Nullsetzungsschaltung (62) eine Schaltung ist, die geeignet ist, um zu erzwingen, dass der Ausgang (52) des elementare Prozessors (38) ein Nullsignal ausgibt, wenn die Nullsetzungsschaltung (62) aktiviert wird,
- eine Testschaltung (64), wobei die Testschaltung (64) eine Schaltung ist, die geeignet ist, um einen anderen elementaren Prozessor (38) der Anordnung (34) von elementare Prozessoren (38) zu testen, wobei der andere elementare Prozessor (38) als zu testender elementare Prozessor (60) bezeichnet wird, wobei die Testschaltung (64) mindestens zwei Konfigurationen aufweist, eine erste Konfiguration, in der die Eingänge (44, 46) des elementaren Testprozessors (58) geeignet sind, um das erste Element des elementaren Testprozessors (58) bzw. das zweite Element des elementaren Testprozessors (58) zu aufzunehmen, und eine zweite Konfiguration, in der die Eingänge des elementaren Testprozessors (58) geeignet sind, um das erste Element des zu testenden elementaren Prozessors (60) bzw. das zweite Element des zu testenden elementaren Prozessors (60) zu aufzunehmen,
wobei die Testschaltung (64) geeignet ist, um in die zweite Konfiguration umzuschalten, wenn die Testschaltung (64) aktiviert wird,
die Testschaltung (64) umfassend einen Komparator (94), wobei der Komparator (94) geeignet ist, um den Wert der Ausgänge (52) des elementaren Testprozessors (58) und des zu testenden elementaren Prozessors (60) zu vergleichen, um ein Vergleichsresultat zu erlangen, und
wobei die Steuerung (36) geeignet ist, um einen Test von jedem zu testenden elementaren Prozessor (60) durchzuführen, durch:
- Aktivieren der Testschaltung (64) und der Nullsetzungsschaltung (62) des elementaren Testprozessors (58),
- Erfassen des Vergleichsresultats des Komparators (94), und
- Bestimmen des Zustands des zu testenden elementare Prozessors (60) abhängig von dem Vergleichsresultat.

2. Systolischer Beschleuniger nach Anspruch 1, wobei jeder durch einen elementaren Testprozessor (58) zu testende elementare Prozessor (60) ein an den elementaren Testprozessor (58) angrenzender Prozessor ist.

3. Systolischer Beschleuniger nach Anspruch 1 oder 2, wobei jeder zu testende elementare Prozessor (60) auch eine Nullsetzungsschaltung (62) umfasst, wobei die Nullsetzungsschaltung (62) eine Schaltung ist, die geeignet ist, um zu erzwingen, dass der Ausgang (52) des elementare Prozessors (38) ein Nullsignal ausgibt, wenn die Nullsetzungsschaltung (62) aktiviert wird, wobei die Steuerung (36) dazu geeignet ist, um die Nullsetzungsschaltung (62) eines zu testenden elementare Prozessors (60) zu aktivieren, wenn die Steuerung (36) nach einem Test bestimmt hat, dass der Zustand des zu testenden elementare Prozessors (60) der ausgefallene Zustand ist.

4. Systolischer Beschleuniger nach Anspruch 3, wobei jede Testschaltung (64) und jede Nullsetzungsschaltung (62) Multiplexer (66, 76, 78) umfasst, die durch Signale der Steuerung (36) gesteuert werden.

5. Systolischer Beschleuniger nach einem der Ansprüche 1 bis 4, wobei der Komparator (94) eines elementaren Testprozessors (58) mehreren elementaren Testprozessoren (58) gemeinsam ist.

6. Systolischer Beschleuniger nach einem der Ansprüche 1 bis 5, wobei der systolische Beschleuniger (16) ein systolischer Beschleuniger für ein tiefes neuronales Netz ist.

7. Systolischer Beschleuniger nach einem der Ansprüche 1 bis 6, wobei der systolische Beschleuniger (16) ein systolischer Beschleuniger für ein neuronales Netz (18) ist, das iterativ durch eine Regularisierungstechnik trainiert wird. wobei die Regularisierungstechnik eine Technik zum Eliminieren von einem oder mehreren zufällig ausgewählten Neuronen (22) des neuronalen Netzes (18) bei jeder Iteration eines Trainings des neuronalen Netzes (18) ist.

8. Systolischer Beschleuniger nach einem der Ansprüche 1 bis 7, wobei die Steuerung (36) geeignet ist, um einen Test von jedem zu testenden elementaren Prozessor (60) unabhängig von dem Zustand des zu testenden elementaren Prozessors (60) durchzuführen, die Steuerung (36) den ausgefallenen Zustand eines zu testenden elementaren Prozessors (60) in einen nicht ausgefallenen Zustand ändert, wenn die Steuereinheit (36) nach mehreren aufeinanderfolgenden Tests bestimmt hat, dass der Zustand des zu testenden elementaren Prozessors (60) ein nicht ausgefallener Zustand ist.

9. Systolischer Beschleuniger nach einem der Ansprüche 1 bis 8, wobei der Anordnung (34) von elementaren Prozessoren (38) periphere elementare Prozessoren (38) umfasst, ein peripherer elementarer Prozessor (38) ein Testprozessor eines benachbarten elementare Prozessors (38) ist und der benachbarte elementare Prozessor (38) auch ein elementarer Testprozessor (58) desselben peripheren elementaren Prozessors (38) ist.

10. Systolischer Beschleuniger nach einem der Ansprüche 1 bis 8, wobei das neuronale Netz (18) eine Gruppe von Neuronen (22) ist, die geeignet sind, um jeweils ein jeweiliges Gewicht, das sogenannte Gewicht des neuronalen Netzes (18), anzuwenden, wobei geänderte Gewichte in einem Speicher des systolischen Beschleunigers (16) gespeichert werden, eine Speichersteuerung, die geeignet ist, um den Speicher zu steuern, wobei die gespeicherten Gewichte modifizierte Gewichte sind, für die mindestens ein Bit mit niedrigem Gewicht des neuronalen Netzes (18) modifiziert wurde, damit die gespeicherten Gewichte ein vordefiniertes Kriterium erfüllen, wobei die Speichersteuerung geeignet ist, um zu überprüfen, ob die gespeicherten Gewichte das Kriterium überprüfen, und das Vorhandensein eines Fehlers zu erkennen, wenn die gespeicherten Gewichte das Kriterium nicht überprüfen.

11. Systolischer Beschleuniger nach Anspruch 10, wobei das Kriterium die Einhaltung einer vorbestimmten Parität oder einer vorbestimmten Kodierung ist.

12. Systolischer Beschleuniger nach Anspruch 10 oder 11, wobei die Speichersteuerung geeignet ist, um das gespeicherte Gewicht auf einen Wert von Null zu setzen, wenn die Speichersteuerung das Vorhandensein eines Fehlers erkannt hat.

13. Elektronisches System (10), insbesondere elektronisches System eines Fahrzeugs, umfassend mindestens einen systolischen Beschleuniger (16) nach einem der Ansprüche 1 bis 12.

14. Verfahren zum Testen von zu testenden elementaren Prozessoren (60) eines systolischen Beschleunigers (16) eines neuronales Netzes (18), der systolische Beschleuniger (16) umfassend eine Anordnung (34) von elementaren Prozessoren (38), die Anordnung (34) umfassend die zu testenden elementaren Prozessoren (60) und eine Steuerung (36), die geeignet ist, um die Anordnung (34) zu steuern,
jeder elementare Prozessor (38) umfassend:
- einen ersten Eingang (44), der geeignet ist, um ein erstes Element aufzunehmen,
- einen zweiten Eingang (46), der geeignet ist, um ein zweites Element aufzunehmen,
- einen Speicher (48), der geeignet ist, ein drittes Element zu speichern,
wobei das erste Element, das zweite Element und das dritte Element jeweils ausgewählt sind aus einem Datenwert, einem Gewicht und einem Wert,
- eine Recheneinheit (50), die geeignet ist, um eine Verarbeitung auf die Daten, das Gewicht und den Wert anzuwenden, um ein Rechenresultat zu erlangen, und
- einen Ausgang (52), der geeignet ist, um das Rechenresultat auszugeben, wobei jeder elementare Prozessor (38) mindestens zwei Zustände aufweist, einen ausgefallenen Zustand und einen nicht ausgefallenen Zustand,
**dadurch gekennzeichnet, dass** elementare Prozessoren (38) der Anordnung (34) von elementaren Prozessoren (38) elementare Testprozessoren (58) sind, jeder elementare Testprozessor (58) umfassend:
- eine Nullsetzungsschaltung (62), wobei die Nullsetzungsschaltung (62) eine Schaltung ist, die geeignet ist, um zu erzwingen, dass der Ausgang (52) des elementare Prozessors (38) ein Nullsignal ausgibt, wenn die Nullsetzungsschaltung (62) aktiviert wird,
- eine Testschaltung (64), wobei die Testschaltung (64) eine Schaltung ist, die geeignet ist, um einen anderen elementaren Prozessor (38) aus dem Anordnung (34) von elementaren Prozessoren (38) zu testen, wobei der andere elementare Prozessor (38) als zu testender elementare Prozessor (60) bezeichnet wird, wobei die Testschaltung (64) mindestens zwei Konfigurationen aufweist, eine erste Konfiguration, in der die Eingänge (44, 46) des elementaren Testprozessors (58) geeignet sind, um das erste Element des elementaren Testprozessors (58) bzw. das zweite Element des elementaren Testprozessors (58) zu aufzunehmen, und eine zweite Konfiguration, in der die Eingänge des elementaren Testprozessors (58) geeignet sind, um das erste Element des zu testenden elementaren Prozessors (60) bzw. das zweite Element des zu testenden elementaren Prozessors (60) zu aufzunehmen,
wobei die Testschaltung (64) geeignet ist, um in die zweite Konfiguration umzuschalten, wenn die Testschaltung (64) aktiviert wird,
die Testschaltung (64) umfassend einen Komparator (94), wobei der Komparator (94) geeignet ist, um den Wert der Ausgänge (52) des elementaren Testprozessors (58) und des zu testenden elementaren Prozessors (60) zu vergleichen, um ein Vergleichsresultat zu erlangen, und das Verfahren umfassend, für jeden zu testenden elementaren Prozessor (60), die folgenden Schritte:
- Aktivieren, durch die Steuerung (36), der Testschaltung (64) und der Nullsetzungsschaltung (62) des elementaren Testprozessors (58) des zu testenden elementaren Prozessors (60),
- Erfassen des Vergleichsresultats des Komparators (94), und
- Bestimmen des Zustands des zu testenden elementare Prozessors (60) abhängig von dem Vergleichsresultat.

## Claims

1. A systolic accelerator (16) for a neural network (18), the systolic accelerator (16) comprising an array (34) of elementary processors (38) and a controller (36) adapted to control the array (34), each elementary processor (38) comprising:
- a first input (44) for receiving a first element,
- a second input (46) for receiving a second element,
- a memory (48) for storing a third element,
the first element, the second element and the third element being respectively chosen from a datum, a weight and a value,
- a calculation unit (50) capable of applying processing to the data, weight and value to obtain a calculation result, and
- an output (52) for outputting the calculation result,
each elementary processor (38) having at least two states, a faulty state and a non-faulty state,
**characterised in that** processor elements (38) of the set (34) of processor elements (38) are test processor elements (58), each test processor element (58) comprising:
- a zeroing circuit (62), the zeroing circuit (62) being a circuit adapted to cause the output (52) of the elementary processor (38) to emit a zero signal when the zeroing circuit (62) is activated,
- a test circuit (64), the test circuit (64) being a circuit suitable for testing another elementary processor (38) of the set (34) of elementary processors (38), the other elementary processor (38) being as an elementary processor to be tested (60), the test circuit (64) having at least two configurations, a first configuration in which the inputs (44, 46) of the elementary test processor (58) are suitable for respectively the first element of the elementary test processor (58) and the second element of the elementary test processor (58) and a second configuration in which the inputs of the elementary test processor (58) are suitable for receiving the first element of the elementary processor to be tested (60) and the second element of the elementary processor to be tested (60) respectively,
the test circuit (64) being able to switch to the second configuration when the test circuit (64) is activated,
the test circuit (64) comprising a comparator (94), the comparator (94) being adapted to compare the value of the outputs (52) of the elementary test processor (58) and of the elementary processor to be tested (60), in order to obtain a comparison result, and
the controller (36) being adapted to test each elementary processor under test (60) by:
- activating the test circuit (64) and the reset circuit (62) of the elementary test processor (58),
- collecting the comparison result from the comparator (94), and
- determining the state of the elementary processor to be tested (60) as a function of the comparison result.

2. A systolic accelerator as claimed in claim 1, wherein each elementary processor to be tested (60) by an elementary test processor (58) is a processor adjacent to the elementary test processor (58).

3. A systolic accelerator according to claim 1 or 2, wherein each elementary processor under test (60) also includes a zeroing circuit (62), the zeroing circuit (62) being a circuit adapted to cause the output (52) of the elementary processor (38) to output a zero signal when the zeroing circuit (62) is activated, **characterised in that** the controller (36) being adapted to activate the zero circuit (62) of an elementary processor under test (60) when, on completion of a test, the controller (36) has determined that the state of the elementary processor under test (60) is the faulty state.

4. The systolic accelerator of claim 3, wherein each test circuit (64) and each zero circuit (62) comprises multiplexers (66, 76, 78) controlled by signals from the controller (36).

5. Systolic accelerator according to any one of claims 1 to 4, wherein the comparator (94) of an elementary test processor (58) is common to several elementary test processors (58).

6. A systolic accelerator according to any one of claims 1 to 5, wherein the systolic accelerator (16) is a deep neural network systolic accelerator.

7. Systolic accelerator according to any one of claims 1 to 6, in which the systolic accelerator (16) is a neural network (18) systolic accelerator trained iteratively by a regularisation technique, the regularisation technique being a technique for eliminating one or more neurons (22) of the neural network (18) chosen at random during each iteration of a training of the neural network (18).

8. A systolic accelerator according to any one of claims 1 to 7, wherein the controller (36) is adapted to perform a test of each processor element under test (60) independently of the state of the processor element under test (60), the controller (36) changing the failed state of a processor element under test (60) to a non-failed state when, after a plurality of successive tests, the controller (36) has determined that the state of the processor element under test (60) is a non-failed state.

9. A systolic accelerator according to any one of claims 1 to 8, wherein the set (34) of elementary processors (38) comprises peripheral elementary processors (38), a peripheral elementary processor (38) being a test processor of an adjacent elementary processor (38) and said adjacent elementary processor (38) also being a test elementary processor (58) of the same peripheral elementary processor (38).

10. Systolic accelerator according to any one of claims 1 to 8, in which the neural network (18) is a set of neurons (22) each suitable for applying a respective weight, known as the weight of the neural network (18), modified weights being stored in a memory of the systolic accelerator (16), a memory controller being adapted to control said memory, the stored weights being modified weights for which at least one least-significant bit of the neural network (18) has been modified so that the stored weights satisfy a predefined criterion, the memory controller being adapted to check that the stored weights satisfy the said criterion and to detect the presence of an error when the stored weights do not satisfy the criterion.

11. Systolic accelerator according to claim 10, wherein the criterion is compliance with a predetermined parity or a predetermined coding.

12. A systolic accelerator according to claim 10 or 11, wherein the memory controller is adapted to set the stored weight to a zero value when the memory controller has detected the presence of an error.

13. An electronic system (10), in particular a vehicle electronic system, comprising at least one systolic accelerator (16) according to any one of claims 1 to 12.

14. A method of testing testable elementary processors (60) of a neural network (18) systolic accelerator (16), the systolic accelerator (16) comprising an array (34) of elementary processors (38), the array (34) comprising the testable elementary processors (60) and a controller (36) adapted to control the array (34),
each elementary processor (38) comprising:
- a first input (44) for receiving a first element,
- a second input (46) for receiving a second element,
- a memory (48) for storing a third element,
the first element, the second element and the third element being respectively chosen from a datum, a weight and a value,
- a calculation unit (50) capable of applying processing to the data, weight and value to obtain a calculation result, and
- an output (52) for outputting the calculation result,
each elementary processor (38) having at least two states, a faulty state and a non-faulty state,
**characterised in that** processor elements (38) of the set (34) of processor elements (38) are test processor elements (58), each test processor element (58) comprising:
- a zeroing circuit (62), the zeroing circuit (62) being a circuit adapted to cause the output (52) of the elementary processor (38) to emit a zero signal when the zeroing circuit (62) is activated,
- a test circuit (64), the test circuit (64) being a circuit suitable for testing another elementary processor (38) of the set (34) of elementary processors (38), the other elementary processor (38) being as an elementary processor to be tested (60), the test circuit (64) having at least two configurations, a first configuration in which the inputs (44, 46) of the elementary test processor (58) are suitable for respectively the first element of the elementary test processor (58) and the second element of the elementary test processor (58) and a second configuration in which the inputs of the elementary test processor (58) are suitable for receiving the first element of the elementary processor to be tested (60) and the second element of the elementary processor to be tested (60) respectively,
the test circuit (64) being able to switch to the second configuration when the test circuit (64) is activated,
the test circuit (64) including a comparator (94), the comparator (94) being adapted to compare the value of the outputs (52) of the elementary test processor (58) and the elementary processor to be tested (60), to obtain a comparison result, and the method comprising, for each elementary processor to be tested (60), the steps of:
- activation by the controller (36) of the test circuit (64) and the reset circuit (62) of the elementary test processor (58) of said elementary processor to be tested (60),
- collect the comparison result from the comparator (94), and
- determine the state of the elementary processor to be tested (60) as a function of the comparison result.
